# EUROPÄISCHE PATENTANMELDUNG

(11) **EP 0 710 024 A2**
(43) Veröffentlichungstag der Anmeldung: **01.05.1996**
(21) Anmeldenummer: 95116428.4
(22) Anmeldetag: 18.10.1995
(51) Int. Cl.: H04N 7/10

(54) **Hausnetz zur Anbindung von Teilnehmern an ein öffentliches Verteilnetz für Video- und/oder Audiosignale**

(30) Priorität: 26.10.1994 DE 4438289
(71) Anmelder: SIEMENS AKTIENGESELLSCHAFT, D-80333 München (DE)
(72) Erfinder: Möhrmann, Karl-Heinz, Dipl.-Ing., D-81369 München (DE)

(57) **Zusammenfassung**

Öffentliche Netze zur Verteilung von Video- und/oder Audiosignalen sind Punkt-zu-Multipunktnetze, bei denen von einer Kopfstelle aus an eine Vielzahl von Teilnehmern Signale gesendet werden. Für die in Zukunft immer wichtiger werdende bidirektionale Übertragung teilnehmerbezogener Signale wird das sich an das öffentliche Netz anschließende Hausnetz so ergänzt, daß das öffentlichen Netz von der Hausverkabelung durch eine für Störungen und Einstreuungen undurchlässige Netzabschlußeinrichtung entkoppelt ist und die Signalübertragung im Hausnetz so robust und störunempfindlich wie möglich erfolgt.

## Beschreibung

Die Erfindung betrifft ein Hausnetz entsprechend dem Oberbegriff des Anspruchs 1.

In der Zeitschrift "Der Fernmeldeingenieur" Heft 9 von 1992, Seiten 8 und 9 ist im Abschnitt 8.3 die Verteilung analoger Videosignale in konventionellen Kabelanlagen von einer Kopfstelle zu einzelnen Teilnehmern und die Möglichkeit zur Übertragung dieser Signale über optische Strecken bereits beschrieben.

Die Verwendung von sogenannten "Set-Top-Boxen" ist in "Funkschau 18" von 1994, Seiten 72 und 73 erläutert und in diesem Zusammenhang wird auch auf die Bereitstellung eines sogenannten interaktiven Netzwerkes für beispielsweise "Video-auf-Abruf" und andere Multimediaanwendungen eingegangen. Dabei zeigt sich, daß zukünftig nicht nur der Anschluß mehrerer Fernsehgeräte bzw. der genannten Set-Top-Boxen bei einem einzigen Teilnehmer erforderlich wird, sondern auch die uni- und/oder bidirektionale Übertragung der Signale vielfältiger Schmalband- und Breitbanddienste in größeren Hausnetzen, beispielsweise in Wohnanlagen und in Häusern mit mehreren oder vielen Teilnehmern.Bei der Einrichtung derartiger zusätzlicher Übertragungsmöglichkeiten ist es erwünscht, zwischen dem öffentlichen Netz und den beim Teilnehmer befindlichen Set-Top-Boxen die üblicherweise vorhandene Hausverkabelung mittels Koaxialkabel oder verdrillten geschirmten oder ungeschirmten Kupferaderpaaren verwenden zu können. Da die Qualität der für die Videosignalübertragung in der Regel vorgesehene koaxialen Hausverkabelungen häufig schlechter ist als die Qualität des öffentlichen Netzes, sind Störungen der zu übertragenden Signale insbesondere durch Einstreuungen oder Reflektionen nicht auszuschließen. Zusätzliche Probleme ergeben sich dadurch, daß die Qualität der Hausverkabelung nicht von vornherein bekannt ist und jeweils erst durch einschlägige Messungen ermittelt werden müßte und auch durch den Betreiber des öffentlichen Netzes nicht oder nur wenig beeinflußbar ist. Der Anschluß insbesondere einer größeren Anzahl von Teilnehmern über eine Hausverkabelung mit mehr oder weniger bekannten Eigenschaften und die Übertragung von Signalen mit unterschiedlichen Signalformaten, unterschiedlichen Modulationen und unterschiedlicher spektraler Lage, für welche diese Hausverkabelung ursprünglich gar nicht vorgesehen war, stellt daher ein gravierendes und bisher nicht voll gelöstes Problem dar. Es besteht zudem die Gefahr, daß aus dem Hausnetz Störungen ins öffentliche Netz gelangen und sich dort, da mehrere oder sogar viele Hausnetze mit demselben öffentlichen Netz verbunden sein können, in unübersehbarer Weise akkumulieren und zum Zusammenbruch des Systems führen können. Untersuchungen über eine vergleichsweise hochratige Digitalsignalübertragung über vorhandene Kupferkabel der Teilnehmeranschlußnetze sind in "ntz" band 44(1991), Seiten 790- 795 veröffentlicht.

Die Erfindung hat die Aufgabe, ein Hausnetz der eingangs erwähnten Art zu schaffen, das die bidirektionale Übertragung zusätzlicher Schmalband- und Breitbanddienste, sogenannter interaktiver Dienste, über die vorhandene Hausverkabelung ermöglicht und verhindert, daß Störungen aus dem Hausnetz in das öffentliche Netz gelangen können.

Erfindungsgemäß wird die Aufgabe durch ein Hausnetz der eingangs genannten Art gelöst, das durch die Merkmale des Kennzeichens des Patentanspruchs 1 weitergebildet ist. Die erfindungsgemäße Lösung bietet in vorteilhafter Weise die Möglichkeit, die bereits vorhandenen Hausnetze unabhängig von der Übertragung im öffentlichen Netz um die Übertragung sogenannter interaktiver Dienste in einem solchen Maße erweitern zu können, daß der Bedarf an Übertragungskapazität im Hausnetz auf lange Zeit gedeckt werden kann. Voraussetzung dafür ist die eerfindungsgemäße Verringerung der Bitrate der Signale der interaktiven Dienste, die dadurch erfolgt, daß jeder Teilnehmer nur die für ihn bestimmten Signale erhält. Bevorzugte Ausbildungen des erfindungsgemäßen Hausnetzes sind in den Patentansprüchen 2 bis 11 beschrieben.

Die Erfindung soll im folgenden anhand von in der Zeichnung dargestellten Ausführungsbeispielen näher erläutert werden. Dabei zeigt:
- Figur 1: ein an ein koaxiales öffentliches Netz angeschlossenes koaxiales Hausnetz,
- Figur 2: ein an ein optisches öffentliches Netz angeschlossenes koaxiales Hausnetz,
- Figur 3: ein an ein koaxiales öffentliches Netz angeschlossenes koaxiales Hausnetz mit zusätzlichem Anschluß an eine Ortsvermittlungsstelle und
- Figur 4: ein an ein koaxiales öffentliches Netz angeschlossenes Hausnetz, bei dem die Teilnehmerendgerate sternförmig über symmetrisch oder unsymmetrisch betriebene digitale Teilnehmerleitungen angeschlossen sind.

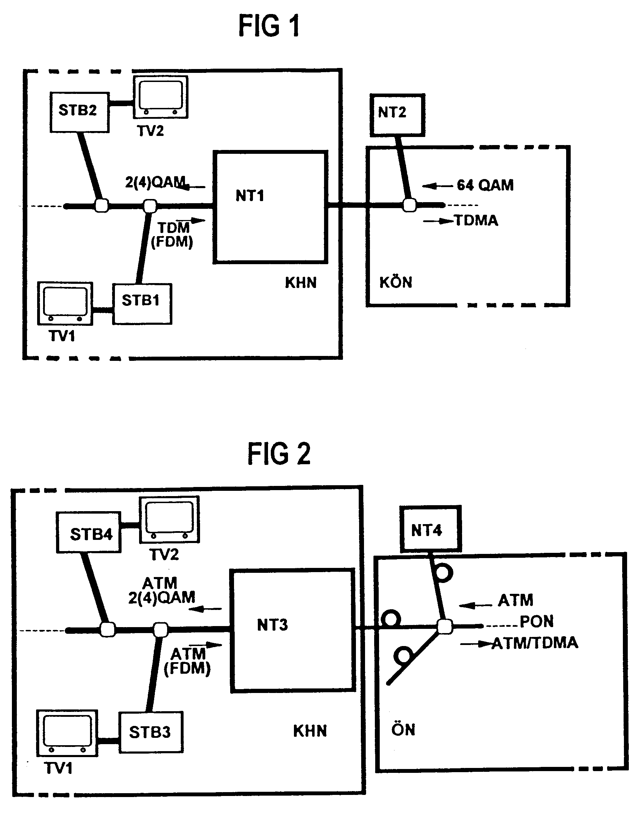

In der Figur 1 sind an ein von einer Kopfstelle ausgehendes koaxiales öffentliches Netz KÖN eine erste und eine zweite Netzabschlußeinrichtung NT1, NT2 als Eingangsteile von Hausnetzen angeschlossen. Neben der Verteilung der Video- und/oder Audiosignale dient das öffentliche Netz der bidirektionalen Übertragung der Signale interaktiver Dienste, wie beispielsweise Video-Auf-Abruf, Tele-Weiterbildung, Tele-Shopping sowie von Telefondiensten. Die Übertragung der Signale der interaktiven Dienste zu den Netzabschlußeinrichtungen erfolgt über ein koaxiales Punkt-zu-Multipunkt-Netz in Baumstruktur ohne zwischengeschaltete aktive Demultiplexer mittels eines komplexen Modulationsverfahrens - beispielsweise 64 QAM - im Hinblick auf eine hinreichend hohe Summen-Datenrate für die angeschlossenen Teilnehmer. So werden beispielsweise für digitale Videosignale drei Kanäle mit einer Bitrate von je 155 MBit/s und für sonstige interaktive Dienste ein Kanal mit der gleichen Bitrate mit jeweils etwa 40 MBit/s pro Kanal vorgesehen. Analoge CATV-Signale werden wie bisher im sogenannten RSB-AM-Format übertragen.

Von den Netzabschlußeinrichtungen NT1, NT2 wird in Aufwärtsrichtung zur Kopfstelle ebenfalls eine entsprechend hohe Übertragungskapazität beispielsweise in Form eines Kanals mit einer Bitrate von 155 MBit/s vorgesehen. Bei Punkt-zu-Multipunkt-Netzen ohne zwischengeschaltete aktive Multiplexer muß in Aufwärtsrichtung für den Signaltransport ein komplexes Vielfach-Zugriffsystem, wie beispielsweise Zeitvielfachzugriff-TDMA, eingesetzt werden. Bei diesem auch für optische passive Netze verwendeten Verfahren gelangt innerhalb einer bestimmten definierten Zeitspanne nur die Information eines angeschlossenen Teilnehmers zur gemeinsamen Kopfstelle. Der Zugriff der einzelnen Teilnehmer auf das Netz wird von der Kopfstelle gesteuert. Da die Übertragung in Form von sogenannten Bursts, also sehr kurzzeitigen Datenpaketen erfolgt und die Durchgangsdämpfung aufgrund der unterschiedlichen Entfernung der Teilnehmer von der Kopfstelle bzw. der unterschiedlichen Anzahl der durchlaufenen Abzweige ebenso wie der differentielle Dämpfungs- und Phasengang bei jedem Teilnehmer anders ist, muß der Empfänger in der Kopfstelle für jedes Datenpaket neu eingestellt werden. Es muß daher für die Burstübertragung ein wesentlich einfacheres und robusteres, also störsicheres, Modulationsverfahren als bei der Übertragung in Abwärtsrichtung zu den Netzabschlußeinrichtungen wie beispielsweise das sogenannte Quadratur-Phasensprung-Modulationsverfahren QPSK oder Einseitenband-AM-Übertragung eingesetzt werden. Das einfachere und robustere Modulationsverfahren führt auch im koaxialen öffentlichen Netz zu einem relativ höheren Bandbreitenbedarf und damit zu schlechterer spektraler Effizienz für die Übertragung in Aufwärtsrichtung.

In der ersten bzw. zweiten Netzabschlußeinrichtung NT1, NT2 werden aus den vom öffentlichen Netz stammenden Signalen die Signale für Sprache und für interaktive Breitbanddienste ausgefiltert und in Gegenrichtung die von den Teilnehmern stammenden Daten in geeigneter Weise zusammengefaßt. Dabei bilden die Netzabschlußeinrichtungen zusammen mit der koaxialen Hausverkabelung und den darüber angeschlossenen bei den Teilnehmern befindlichen Set-Top-Boxen jeweils ein koaxiales Hausnetz KHN. Die Set-Top-Boxen STB1, STB2 sind dabei über Koaxialkabel mit einem entsprechendem Ausgang der ersten Netzabschlußeinrichtung NT1 verbunden, an die Ausgänge der Set-Top-Boxen sind ein erster bzw. zweiter Fernsehempfänger TV1, TV2 angeschlossen. Eine unmittelbar beim Teilnehmer befindliche Set-Top-Box ist dabei unbedingt dann erforderlich, wenn die decodierten Videosignale zur Erzielung einer möglichst hohen Bildqualität und zur Vermeidung der Rückwandlung in ein PAL-,Secam-oder NTSC-codiertes UHF-Signal dem Fernsehempfänger im RGBS-Format über die sogenannte SCART- oder Euro-AV-Buchse zugeführt werden. Die zulässige Leitungslänge für die Verbindung zu diesen Buchsen ist nämlich auf wenige Meter beschränkt. In Abwärtsrichtung könnten bei hinreichend vorhandener Übertragungskapazität im koaxialen Hausnetz prinzipiell alle ankommenden Signale von der ersten Netzabschlußeinrichtung NT1 unverändert bis zu den Set-Top-Boxen weitergeleitet werden. In diesem Falle wählen die Set-Top-Boxen die dem angeschlossenen Teilnehmerendgerät jeweils zugeordneten Signale aus dem Datenstrom aus und führen sie dem Teilnehmerendgerät - also beispielsweise dem Fernsehempfänger zu. Zusätzlich werden jedem Fernsehempfänger die analogen und/oder digitalen Signale des üblichen Verteilfernsehens zugeführt, so daß sich relativ hohe Anforderungen an die Hausverkabelung ergeben würden.
Eine zweckmäßige Lösung des Problems der Übertragung der Signale der interaktiven Videodienste im Hausnetz zu den Set-Top-Boxen besteht in der Übertragung im digitalen Format, da nur in diesem Falle höchste Bildqualität am Empfänger sowie eine hinreichende Datensicherheit als Schutz vor unzulässiger Verbreitung der übertragenen Signale gewährleistet ist. In diesem Falle erfolgt die Übertragung im sogenannten MPEG-Code bzw. Format, so daß in der angeschlossenen Set-Top-Box, in der die Entschlüsselung und die MPEG-Decodierung erfolgt, auch eine Übertragung der digitalen Signale in Form von ATM-Zellen ist in diesem Falle möglich.

Eine zweckmäßige Weiterbildung im Hinblick auf eine Reduktion der notwendigen Übertragungsrate und damit zum Einsatz robusterer obwohl spektral ineffizienterer Modulationsverfahren besteht in der Aussonderung der aus dem öffentlichen Netz stammenden Signale der interaktiven Videodienste für die angeschlossenen Set-Top-Boxen bereits in der jeweiligen Netzabschlußeinrichtung. In der ersten Netzabschlußeinrichtung NT1 ist im Hinblick auf die Abtrennung der Signale für Telefonie und sonstige beim Teilnehmer befindliche Kommunikationseinrichtungen wie beispielsweise Personalcomputer bereits ein Demultiplexer vorhanden. Dieser Demultiplexer wird zweckmäßigerweise so ausgebildet, daß von ihm auch die Signale der interaktiven Videodienste für die angeschlossenen Set-Top-Boxen bereits mit ausgesondert werden. Im Hausnetz werden dann, mit Ausnahme des üblichen Verteilfernsehens und Ton-Rundfunks, nur diejenigen Informationen von und zu dem Teilnehmer übertragen, welche von diesem benötigt bzw. abgeschickt werden. Die Netzabschlußeinrichtung fügt die von den Teilnehmern kommenden Signale in geeigneter Weise in Richtung zur Zentrale in das koaxiale öffentliche Netz KÖN ein.

Für die digitalen Fernsehsignale interaktiver Videodienste bedeutet dies eine Trennung von Demodulation und MPEG-Decodierung, indem die Demodulation und das Demultiplexen, also die Auswahl eines bestimmten Programmes, in der Netzabschlußeinrichtung erfolgen, die MPEG-Decodierung für die digitalen datenkomprimierten Videosignale dagegen in der dem Teilnehmerendgerät unmittelbar vorgeschalteten Set-Top-Box erfolgt.

In der ersten Netzabschlußeinrichtung NT1 erfolgt die Umsetzung der von der Zentrale stammenden Signale der interaktiven Dienste in das im Hausnetz vorgesehene Signalformat mittels des erwähnten "robusten" Modulationsverfahrens. Um die Synergie mit Einrichtungen für andere Dienste zu nutzen und die notwendigen Zusatzkosten gering zu halten, wird in einer ersten Ausführungsform entsprechend Figur 1 die Übertragung der digitalen Signale interaktiver Videodienste zu den Set-Top-Boxen ebenfalls im Standard-CATV-Kanalraster mit einer Kanalbreite von 8 MHz oberhalb des bisher schon verwendeten Hyperbandes, also oberhalb von etwa 450 MHz durchgeführt. Dazu wird jedem Teilnehmer für interaktive Videodienste und damit jeder Set-Top-Box in der Netzabschlußeinrichtung ein derartiger Kanal zugeordnet. Die Zuordnung ist dabei entweder fest vorgegeben oder dynamisch wählbar. Im letzteren Falle wird die Set-Top-Box über einen schmalbandigen Signalisierungskanal informiert, in welchem der CATV-Kanäle die angeforderte Information übertragen wird und vom Tuner der Set-Top-Box dann dieser Kanal angewählt. Die dynamische Zuordnung hat dabei den Vorteil, daß ein Verkehrsgewinn erzielt werden kann, da nicht alle angeschlossenen Teilnehmer gleichzeitig die interaktiven Dienste nutzen. Bei diesem Verfahren können also mehr Teilnehmern, als Übertragungskanäle vorhanden sind, die Signale interaktiver Dienste zugeführt werden. Die Einrichtungen zur Auffindung eines Signals im Signalband, zu dessen Demodulation und Neumodulation und zur Umsetzung nach einer Filterung in der ZF-Lage in einen Übertragungskanal entsprechen dabei den Einrichtungen in Gemeinschaftsantennenanlagen. Zusätzlich ist ein steuerbarer Demultiplexer in der Netzabschlußeinrichtung erforderlich, welcher den ebenfalls in der Netzabschlußeinrichtung enthaltenen Kanalumsetzern für die Übertragungskanäle die jeweiligen zu übertragenden Signale zuweist. Damit ergibt sich im Hausnetz eine minimale zu belegende Übertragungsbandbreite.
Die Netzabschlußeinrichtungen sind bei diesem und auch den anderen Ausführungsbeispielen im Hinblick auf eine leichte Anpassung an die unterschiedlichen Anforderungen modular mit der Möglichkeit zum Austausch einzelner Steckkarten aufgebaut.

Die Übertragung der digitalen Signale der interaktiven Dienste in der hier beschriebenen ersten Ausführungsform mittels einer zum digitalen terrestrischen Fernsehen kompatiblen, aber robusteren und einfacher zu realisierenden Modulation erfolgt mittels der bekannten zweiwertigen oder bevorzugt der vierwertigen Amplitudenumtastung bzw. Zwei-oder Vierfachquadraturamplitudenmodulation 2(4)QAM . Ein Demodulator für das im koaxialen öffentlichen Netz benutzte Verfahren der 64-stufigen Quadraturamplitudenmodulation 64QAM kann auf einfache Weise auf das Verfahren der Zwei-oder Vierfachquadraturamplitudenmodulation 2(4)QAM umgeschaltet werden. Mit diesem Verfahren ist bei der 2QAM die Übertragung einer Bitrate von etwa 6 bis 8 MBit in einem 8 MHz-Kanal möglich, bei Anwendung des 4QAM-Verfahrens ist auch die doppelte Bitrate in einem 8 MHz-Kanal übertragbar.

Auf diese Weise können soviele Teilnehmer gleichzeitig mit interaktiven Videodiensten versorgt werden, wie freie Kanäle im koaxialen Hausnetz KHN verfügbar sind. Wird beispielsweise der Bereich von etwa 450 bis 600 MHz oberhalb des Hyperbandes genutzt, so stehen etwa 150 MHz oder 18 Signalkanäle zur Verfügung. Bei Einsatz des 4QAM-Verfahrens kann diese Übertragungskapazität verdoppelt werden, sodaß dann pro Kanal zwei Fernsehprogramme übertragen werden können, eine weitere Ausdehnung des nutzbaren Frequenzbereiches und damit der verfügbaren Kanalzahl ist im Einzelfalle bei einer entsprechenden Kabelqualität der Hausverkabelung möglich. Dies würde eine Versorgung einer erheblichen Anzahl von Teilnehmern beispielsweise in einer größeren Wohnanlage oder einem Hochhaus ermöglichen.

Die Aufwärts-Übertragung der Kanalwahl-Informationen im Hausnetz von den Set-Top-Boxen zur Netzabschlußeinrichtung kann entweder im Basisband unterhalb der bisher verwendeten Übertragungskanäle oder mittels eines einfachen Modulationsverfahrens im Bereich oberhalb von 450 MHz, also oberhalb des Fernsehverteilbandes, erfolgen. Im Hinblick auf das einfache Signalformat kann auch ein einfaches Multiplexverfahren, beispielsweise zyklische Anfrage durch die jeweilige Netzabschlußeinrichtung, verwendet werden, wobei allerdings die Systemverzögerung gering sein muß, um etwaige Echtzeitbedingungen einhalten zu können. Die Aufwärtsübertragung zur Netzabschlußeinrichtung kann auch mittels ATM-Zellen erfolgen.

Bei einer Weiterbildung der Erfindung erfolgt auch die Übertragung der Signale der interaktiven Dienste von der Netzabschlußeinrichtung NT1 zu den Set-Top-Boxen mittels ATM-Zellen. In diesem Falle ist eine Ausbildung der Erfindung zweckmäßig, bei der die Übertragung der Signale der interaktiven Dienste in wenigen breiteren Kanälen mit entsprechend höherer Datenrate pro Kanal und ebenfalls einer robusten Modulation erfolgt. Zweckmäßig ist in diesem Falle die Verwendung von Zeitmultiplex(TDM)-Verfahren gegenüber Frequenzmultiplex(FDM)-Verfahren, da hierdurch eine besonders kostengünstige Realisierung möglich ist. In der Netzabschlußeinrichtung sind dann nur einer oder wenige Kanalumsetzer und Modulatoren erforderlich, so daß sich ein vorteilhaft geringer Aufwand ergibt und damit diese gegenüber dem digitalen terrestrischen Fernsehen nicht kompatible Weiterbildung zweckmäßig sein kann. Infolge der nunmehr gegenüber der Übertragung im öffentlichen koaxialen Netz merklich begrenzten Datenrate und Kanalzahl können relativ große Schutzabstände zwischen den einzelnen Frequenzbändern vorgesehen werden, so daß eine Trennung dieser Frequenzbänder mittels einfacher Filter gegenüber der Verwendung eines 8 MHz Rasters möglich ist. Es ist auch der Einsatz eines nicht QAM-kompatiblen Modulationsverfahren für mittels ATM übertragene Signale interaktiver Dienste möglich, die entsprechende Set-Top-Box schaltet dann den Modulator entsprechend um.

In der Figur 2 erfolgt die Signalübertragung zwischen einer fernen Kopfstelle und einem koaxialen Hausnetz KHN über ein optisches öffentliches Netz PON. Bei einer derartigen optischen Übertragung im öffentlichen Netz gibt es keine Vorteile für die analoge oder quasianaloge Übertragung von Videosignalen oder anderen Breitbandsignalen. Neben den Signalen der interaktiven Dienste können in diesem Falle auch die Video-Verteilprogramme datenkomprimiert mittels MPEG-Codierung im Basisband und vorzugsweise im ATM-Format zu den Hausnetzen übertragen werden. In der Figur 2 sind an das öffentliche Netz eine dritte und eine vierte Netzabschlußeinrichtung NT3, NT4 angekoppelt, die jeweils wesentlicher Teil des Hausnetzes KHN sind. Die dritte und die vierte Netzabschlußeinrichtung NT3, NT4 weisen zusätzlich opto-elektrische Wandler auf, die das im öffentlichen Netz übertragene optische Signal in ein elektrisches Signal umwandeln. An die dritte Netzabschlußeinrichtung NT3 sind über Koaxialkabel eine dritte und eine vierte Set-Top-Box und an diese ein erster bzw. zweiter Fernseher TV1, TV2 angeschlossen. Die Übertragung von der dritten Netzabschlußeinrichtung NT3 zu den Set-Top-Boxen erfolgt nun für alle Videosignale im MPEG-Code, wobei auch die TV-Verteilprogramme in der Netzabschlußeinrichtung durch Demultiplexen aus dem ankommenden Signal gewonnen werden und an die Set-Top-Boxen nur die gerade angeforderten Programme übertragen werden. Die erforderliche Kapazität des koaxialen Hausnetzes KHN bestimmt sich nun nicht mehr nach der Zahl der angelieferten Programme, sondern nur noch nach der Zahl der gleichzeitig aktiven Set-Top-Boxen, was wiederum den Einsatz einer einfachen und robusten Modulation mit erhöhter Redundanz im Hausnetz erleichtert. Die Übertragung schmalbandiger digitaler Signale, insbesondere Telefonsignale, kann über dasselbe koaxiale Hausnetz wie für die Signale der interaktiven Dienste erfolgen. Bei einer bevorzugten Ausbildung des koaxialen Hausnetzes nach der Figur 2 erfolgt die Übertragung der Telefonsignale zur dritten Netzabschlußeinrichtung NT3 im freien Bereich unterhalb 47 MHz. Die Übertragung von der dritten Netzabschlußeinrichtung NT3 zu den Teilnehmern kann bei geringer benötigter Übertragungskapazität auch in diesem Bereich, bei höherer benötigter Übertragungskapazität, also bei einer größeren Anzahl an das Hausnetz angeschlossener Teilnehmer, kann die Übertragung in einem oder einigen wenigen ansonsten für Videosignale vorgesehenen Kanälen erfolgen. Die Übertragung der Signale der interaktiven Dienste erfolgt wie beim Hausnetz nach der Figur 1 beispielsweise mittels Binär- oder Quadraturamplitudenmodulation 2(4) QAM vorzugsweise in ATM-Zellen, in der Gegenrichtung ist neben Zeitmultiplexübertragung auch Übertragung in einem oder mehreren Frequenzbändern möglich.

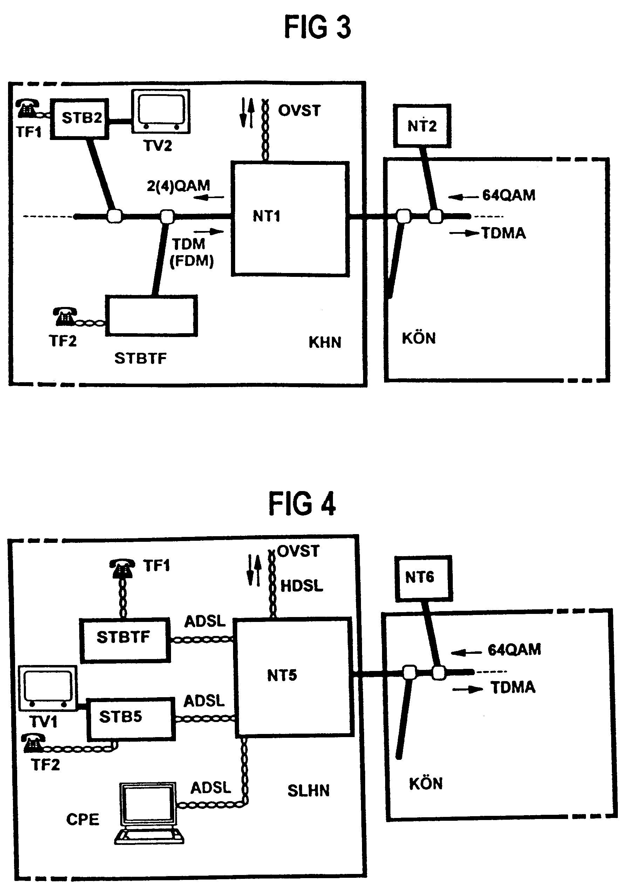

In der Figur 3 erfolgt die Übertragung der Signale im öffentlichen Netz wie bei der Anordnung nach Figur 1 über Koaxialkabel, so daß auch die bereits bei der Figur 1 vorgesehenen Übertragungsverfahren Anwendung finden. Wie bei der Figur 1 ist auch bei der Figur 3 im koaxialen Hausnetz KHN an die erste Netzabschlußeinrichtung NT1 über ein Koaxialkabel die zweite Set-Top-Box STB2 und an diese der zweite Fernsehempfänger TV2 angeschlossen. Zusätzlich ist aber die zweite Set-Top-Box STB2 um ein Telefonmodul ergänzt und an dieses ein erstes Telefon TF1 angeschlossen. Außerdem ist eine nur für den Anschluß eines Telefons ausgerüstete Telefon-Set-Top-Box STBTF mit der ersten Netzabschlußeinrichtung verbunden, die dafür in ihrem modularen Aufbau entsprechend abgeändert ist- hier zeigen sich deutlich die Vorteile eines modularen Aufbaus der Netzabschlußeinrichtungen.
Abweichend von der Figur 1 werden bei der Figur 3 die Telefonsignale nicht über das koaxiale öffentliche Netz KÖN sondern über für digitale Telefonsignale mit einer Summenbitrate von beispielsweise 2 MBit/s geeignete zusätzliche Leitungen von und zur Ortsvermittlungsstelle OVST übertragen. Bei geringer benötigter Übertragungskapazität für Telefonsignale können über diese Leitungen auch die Signale für Schmalband-Datenkommunikation übertragen werden. Die Einrichtung nach der Figur 3 findet zweckmäßigerweise insbesondere dann Verwendung, wenn die Leitungen zur Ortsvermittlungsstelle bereits vorhanden sind, da hierdurch der Aufwand in den Netzabschlußeinrichtungen NT1, NT2... und auch im koaxialen öffentlichen Netz KÖN verringert werden kann.

In der Figur 4 sind an ein koaxiales öffentliches Netz, das dem der Figuren 1 und 3 entspricht, eine fünfte bzw. sechste Netzabschlußeinrichtung NT5, NT6 angeschlossen. An die fünfte Netzabschlußeinrichtung NT5 ist ein ausschließlich mittels symmetrischer Leitungen aufgebautes Hausnetz SLHN angeschlossen. Die geschirmten oder ungeschirmten symmetrischen Kupferleitungen sind dabei in einer sternförmigen Konfiguration zwischen der fünften Netzabschlußeinrichtung NT5 einerseits und andererseits einer Telefon-Set-Top-Box STBTF für den ausschließlichen Anschluß des ersten Telefons TF1, einer fünften Set-Top-Box STB5 für den Anschluß des ersten Fernsehers TV1 und des zweiten Telefons TF2 und einer Datenkommunikationseinrichtung CPE angeordnet. Die Übertragungstechnik über diese Leitungen entspricht der für höhere Datenraten erweiterten Übertragungstechnik ADSL für asymmetrische digitale Teilnehmerleitungen, die aus "Telephony", 12.July 1993, S.20-26 und aus IEEE Communications Magazine May 1994, S.102-109 bekannt ist. Voraussetzung für den Aufbau eines derartigen Hausnetzes SLHN nach der Figur 4 ist, daß die Entfernungen zwischen der jeweiligen Netzabschlußeinrichtung und den Set-Top-Boxen ein bestimmtes Maß nicht überschreiten. In diesem Falle ist entweder eine einfache und billige Realisierung der Netzabschlußeinrichtung und der Set-Top-Boxen und/oder eine Erhöhung der jeweiligen Datenrate bis zur gleichzeitigen Übertragung mehrerer Videosignale pro Teilnehmer sowie symmetrische interaktive Breitbandsignalübertragung im gleichen Netz auf den gleichen Leitungen bis zu einigen 10 Mbit/s möglich. Im letzten Fall sind geeignete Modulationsverfahren, wie beispielsweise das sogenannte VHDSL (Very High Speed Digital Subscriber Line)- Verfahren einzusetzen, welche die symmetrische Übertragung hoher Datenraten über symmetrische Leitungen über kurze Entfernungen erlauben.

Der Vorteil eines Hausnetzes SLHN nach der Figur 4 liegt darin, daß derartige Hausverkabelungen mit geschirmten oder ungeschirmten symmetrischen Kupferleitungen in vielen Fällen bereits vorhanden sind, auch eine Nachrüstung mit derartigen Leitungen ist im Vergleich zu relativ unhandlichen Koaxialkabeln leichter möglich.
Alternativ zu einer sternförmigen Struktur des Hausnetzes sind auch Bus- oder Ringstrukturen möglich, die Zugriffsverfahren für die einzelnenangeschlossenen Endgeräte entsprechen den in LANs üblichen Verfahren.

## Patentansprüche

1. Hausnetz zur Anbindung von Teilnehmern an ein öffentliches Verteilnetz für Video- und/oder Audiosignale über eine Netzabschlußeinrichtung, an die einerseits im Hause befindliche zu den Teilnehmern führende Verbindungsleitungen und andererseits das öffentliche Netz angeschlossen sind,
**dadurch gekennzeichnet,**
daß zur zusätzlichen bidirektionalen Übertragung interaktiver Schmalband- und Breitbanddienste die Netzabschlußeinrichtungen (NT1, NT2 ...) die für die angeschlossenen Teilnehmer bestimmten Informationen aus dem vom öffentlichen Netz angelieferten Signal ausselektieren und die von den Teilnehmern kommenden Informationen in das von der Netzabschlußeinrichtung abgehende Signal einfügen,
daß die von der Netzabschlußeinrichtung (NT1, NT2 ...) ausselektierten Signale in digitaler Form zu in Teilnehmernähe angeordneten Set-Top-Boxen (STB1, STB2, ... STBTF) mittels eines redundanten und robusten Modulationsverfahrens übertragen werden und daß die Netzabschlußeinrichtung die von den Teilnehmern stammenden Telefonsignale wahlweise in das öffentliche Netz einspeist oder über zusätzliche Leitungen zu einer Ortsvermittlungsstelle (OVSt) überträgt.

2. Hausnetz nach Patentanspruch 1,
**dadurch gekennzeichnet,**
daß die Netzabschlußeinrichtungen (NT1, NT2...) modular aufgebaut sind.

3. Hausnetz nach Patentanspruch 1,
**dadurch gekennzeichnet,**
daß die Übertragung digitaler Breitbandsignale von der Netzabschlußeinrichtung (NT1, NT2...) zu bei den Teilnehmern angeordneten Set-Top-Boxen (STB1, ...) im Standard-CATV-Kanalraster mit einer Kanalbreite von 8 MHz oberhalb des bis 450 MHz reichenden Hyperbandes erfolgt.

4. Hausnetz nach Patentanspruch 1,
**dadurch gekennzeichnet,**
daß die Übertragung der digitalen Breitbandsignale von der Netzabschlußeinrichtung (NT1, NT2 ...) zu den Set-Top-Boxen (STB1 ...) mittels einer zum digitalen terrestrischen Fernsehen über Kabelsysteme kompatiblen Modulation, insbesondere mittels Binär- oder Quadratur-Amplitudenmodulation erfolgt.

5. Hausnetz nach Patentanspruch 1,
**dadurch gekennzeichnet,**
daß die Übertragung der digitalen Breitbandsignale von den Netzabschlußeinrichtungen (NT1, NT2...) zu den Set-Top-Boxen (STB1,...) mittels ATM-Zellen in einem Frequenzraster mit einigen wenigen Kanälen mit einer Bandbreite größer als 8 MHz erfolgt.

6. Hausnetz nach Patentanspruch 1,
**dadurch gekennzeichnet,**
daß bei optischer Signalübertragung im öffentlichen Netz sämtliche TV-Signale in digitaler Form vorzugsweise mittels des MPEG-Codierverfahrens im Basisband und im ATM-Format übertragen und von den Netzabschlußeinrichtungen (NT1, NT2,...) empfangen werden und die Kanalwahl für die bei den jeweiligen Teilnehmern befindlichen Set-Top-Boxen (STB1,...) in der Netzabschlußeinrichtung durch Demultiplexen erfolgt.

7. Hausnetz nach Patentanspruch 1,
**dadurch gekennzeichnet,**
daß die Übertragung der Kanalwahlinformationen für die Fernsehprogramme im Hausnetz von den Set-Top-Boxen (STB1,...) zur jeweiligen Netzabschlußeinrichtung (NT1, NT2,...) wahlweise im Basisband oder mittels eines einfachen Modulationsverfahrens in einem Frequenzbereich unterhalb 47 MHz erfolgt.

8. Hausnetz nach Patentanspruch 1,
**dadurch gekennzeichnet,**
daß die Telefonsignalübertragung von den Teilnehmern zur Netzabschlußeinrichtung im Frequenzbereich unterhalb 47 MHz und von der Netzabschlußeinrichtung zu den Teilnehmern in einem freien CATV-Kanal erfolgt.

9. Hausnetz nach Patentanspruch 1,
**dadurch gekennzeichnet,**
daß die Telefonsignale in einem mittels geschirmter oder ungeschirmter symmetrischer Kupferleitungen aufgebauten zusätzlichen Hausnetz übertragen werden und daß die Netzabschlußeinrichtung (NT1, NT2, ...) wahlweise die Telefonsignale über das öffentliche Netz für Verteilsignale oder über zusätzliche Leitungen an eine Ortsvermittlungsstelle (OVSt) weiterleitet.

10. Hausnetz nach einem der vorhergehenden Patentansprüche,
**dadurch gekennzeichnet,**
daß die Breitbandsignale über Koaxialkabel zwischen der Netzabschlußeinrichtung und den Set-Top-Boxen übertragen werden.

11. Hausnetz nach einem der Ansprüche 1 bis 9,
**dadurch gekennzeichnet,**
daß sämtliche Signale mittels ungeschirmter oder geschirmter symmetrischer Kupferleitungen in einer sternförmigen Konfiguration zwischen der jeweiligen Netzabschlußeinrichtung (NT1, NT2,...) und den Set-Top-Boxen (STB1,...) mittels einer für symmetrischeoder asymmetrische digitale Teilnehmerleitungen (ADSL,VHDSL) vorgesehenen Übertragungstechnik übertragen werden.
